# EUROPEAN PATENT SPECIFICATION

(11) **EP 3 964 059 B1**
(45) Date of publication and mention of the grant of the patent: **11.12.2024**
(21) Application number: 21194657.9
(22) Date of filing: 02.09.2021
(51) Int. Cl.: A01K 97/12

(54) **FISHING BITE INDICATOR**
FISCHBISSANZEIGER
INDICATEUR DE TOUCHE DE PÊCHE

(30) Priority: 03.09.2020 GB 202013845; 16.07.2021 GB 202110285
(43) Date of publication of application: 09.03.2022
(73) Proprietor: Catchum 88 Limited, Hockley SS5 5LR (GB)
(72) Inventor: NASH, Kevin Robert, Hockley SS5 5LR (GB)
(74) Representative: Dummett Copp LLP

(56) References cited:
- EP-A1- 3 498 093
- EP-A1- 3 498 094
- EP-A2- 1 614 348

## Description

### FIELD OF THE INVENTION

The present invention relates to a bite indicator, an assembly comprising angling apparatus and a bite indicator and a method of locating angling apparatus.

### BACKGROUND TO THE INVENTION

Bite indicators are commonly used by anglers in order to help signal the occurrence of a bite on angling apparatus. In particular, carp anglers frequently use such bite indicators which provide an audible and/or visual signal indicating the occurrence of a bite.

Bite indicators usually include either a wheel/drum or a stylus to detect the movement of a fishing line. Both systems can be used in detecting line movements (or deviations) and/or line speed.

The two basic types of fishing bite indicators provide either a moving wheel or a vibration sensor. The moving wheel usually has a magnet or multiple magnets embedded in the wheel or shaft. When the wheel is rotated, the magnetic field influences a reed switch or Hall effect sensor. The vibration sensor usually involves a Piezo electric device but there are other methods detects the movement as the line runs across the sensor.

Bite indicators are secured at the top free end of a bank stick/rod rest. The bite indicator then provides a light and/or audible signal to indicate when a significant movement or change in movement in the fishing line has been detected which suggests a bite. The angler is usually located in a bivouac shelter/chair facing the bite alarm with the stretch of water beyond the bite alarm. The angler thereby faces both the bite alarm and the stretch of water. This enables the angler to continually monitor both the bite alarm and the stretch of water, fishing line, rod tip, surface of the water etc. Accordingly, the bite alarm is fixed to the top of a bank stick such that the main face is directly facing the angler. The fishing line must pass over the bite alarm substantially perpendicularly and therefore the bite alarm must be in the correct fixed position/orientation. The bite alarm provides a main face which is fixed to directly face the angler and includes the light to signal a potential bite to the angler and also any other indicating lights must be clearly visible to the angler in this position and these are therefore also provided to face the angler.

At night, anglers may utilise torches or lanterns to provide some light within a bivvy. This enables an angler to see apparatus and equipment and may also prevent the angler becoming disorientated within the adjacent area.

In addition, at night or in poor lighting conditions, it can be problematic for anglers to notice line movement using a bobbin. Illuminated bobbins can be suspended from the fishing line by means of a releasable line clip. The bobbin provides a visual bite indicator that moves vertically up and down as the tension in the line changes. Bobbins incorporate an illumination device/light source but this will require either an electrical power source or a light source providing light to the bobbin through an optical fibre or the like.

Such electrical/light sources are provided in the bite alarm and a wire/fibre extends between the bite alarm and the bobbin. Screw fittings or push fittings are used to connect the wire/fibre to the bite alarm. Screw fittings provide very secure connections but do not facilitate the easy removal of the bobbin assembly. Such fittings may also be dimensionally quite large which encourages the ingress of water and dirt/debris. Push fittings do allow the easy connection and disconnection but these fittings may be prone to accidental or inadvertent disconnection which may unknowingly cause the light to not be operational in the bobbin and also may provide an opportunity for the electrical connectors to be exposed whilst accidentally disconnected.

EP 1 614 348 discloses a fish bite detector and a remote control for the detector.

The fish bite detector provides a light emitting diode and a buzzer/speaker to indicate the detection of a fishing bite.

It is an aim of the present invention to overcome at least one problem associated with the prior art whether referred to herein or otherwise.

### SUMMARY OF THE INVENTION

According to a first aspect of the present invention defined in claim 1, there is provided a bite indicator assembly comprising a bite indicator comprising a housing, the housing comprising:
a first face and a second face which face in opposite directions;
   a surface for supporting a fishing rod in a position in which a line of the fishing rod makes contact with a sensing device to cause the sensing device to sense movement of the line;
indicating means to indicate movement of the line; and
a location indicator to indicate the location of the bite indicator, the location indicator comprising a light which is remotely operable by a portable remote control unit; characterised in that:
   the indicating means is located on the first face of the housing and the location indicator is located on the second face.

Preferably the bite indicator is arranged, in use, for the first face to be facing away from a body of water being fished and for the second face to be facing towards the body of water being fished.

Preferably the indicating means comprising a light which may comprise at least one LED. Preferably the location indicator comprises an LED and preferably comprise a single LED.

The LED may comprise an ultra bright LED. The LED may comprise a surface mount technology (SMT) LED.

The LED may comprise a multi-coloured LED. The LED may comprise a colour change control system to enable a user to change/select the colour of the LED.

The light may comprise an LED (light emitting diode) which may use RGB (red, green and blue) prism technology with 16 million colours and the colours may be user programmable.

The location indicator may be mounted on the second face and preferably is mounted in a central position on the second face.

The second face of the housing may provide a recess which surrounds the location indicator. The recess may provide a guide surface to guide the light away from the housing and may prevent light from the location indictor being dispersed laterally to lateral sides and/or vertically to upper/lower sides of the housing. Preferably the recessed surface guides the light directly away from the housing.

The location indicator may comprise a lens. The lends may be arranged to focus the light of the location indicator and may focus/direct the light directly away from the location indicator and may prevent or inhibit light being dispersed laterally towards the sides/upper/lower locations relative to the second face of the housing.

The lens may be arranged to protect the LED. The lens may be secured over the LED. The lens may be fixed over the LED. The lens may be secured over the LED to protect the LED from moisture and may weather proof the LED.

The location indicator may comprise a light pipe. The light pipe may be arranged to direct light from the LED outwardly and may guide the light away from the bite indicator.

The light pipe may locate between the LED and the lens.

The remote control unit may comprise a handset and preferably comprise a portable handset.

The remote control unit may comprise an actuator to enable a user to operate the location indicator. The location indicator may comprise a light and preferably the actuator enables a user to turn the light on and/or to turn the light off. The actuator may comprise a button and preferably comprise a single push button.

The housing of the bite indicator may comprise control means to enable a user to select and/or change the light colour of the location indicator. The control means may comprise one or more buttons provided on the housing.

The bite indicator may comprise securement means for securing the housing to a support member.

The support member may comprise a ground engaging member. The ground engaging member may comprise an elongate support stick rod. Preferably the support member comprises a bank stick.

The securement means may comprise a screw thread which may be provided on a stub projecting away from a lower face of the housing.

Preferably the surface on the housing is arranged to support a fishing rod in a position in which a line of the fishing rod makes contact with a sensing device (wheel/stylus) to cause the sensing device (wheel to rotate/stylus to vibrate) to sense movement of the line and a sensing system produces an electrical signal with movement of the line (rotation of the wheel/vibration of the stylus).

Preferably the surface comprises a recessed surface on a third (upper) face of the housing. The third face may link between/extend between/connect the first face to the second face.

The surface may comprise a channel which may extend between the first face and the second face of the housing. The first face may be space from the second face of the housing to provide a length for the support surface. The channel may retain a rod in a stable orientation relative to the housing and also preferably relative to the ground/body of water.

The housing may comprise a fourth (lower) face which provide securement means for securing the housing to a support member.

The housing may comprise lateral surfaces which may extend around the sides of the housing and may link between/extend between/connect the first face to the second face.

The faces may be shaped, curved, arcuate and/or profiled.

The housing may comprise an opening (groove) within which the fishing line is arranged to locate. The groove may extend between the first face and the second face of the housing.

Preferably the bite indicator comprises an alarm circuit for producing an (audible or visible) alarm signal which may be triggered by predetermined parameters.

The bite indicator assembly may comprise the bite indicator and a bobbin assembly, the bobbin assembly comprising:
a bobbin comprising an electrically powered illuminated indicator;
a male connector comprising two radial pins; and
an electrical power transmission line extending between the bobbin and the male connector,
the bite indicator comprising a housing, the housing comprising an electrical socket for connection with the male connector of the bobbin assembly, the socket comprising two guide slots for engagement with the respective radial pins of the male connector, each slot comprising:
an outer open end;
an angled section; and
a final closed end
wherein each pin is initially engageable into the guide slot (preferably a respective guide slot) through the open end and the pins are movable to the final locked position through an initial push movement of the male connector followed by a rotational movement of the male connector in the socket.

Preferably each guide slot has a travel length extending from the open end to the final closed end. Preferably each guide slot has a transverse width to guide an outer periphery of the respective pin through the respective slot. Preferably the transverse width of the guide slot changes from the open end to the final closed end. The transverse width of the guide slot at the open end may be greater than the transverse width of the guide slot in an intermediate section between the open end and the final closed end. Preferably the intermediate section comprises the angled section. The angled section may comprise a substantially perpendicular angled section. The final closed end may comprise a bulbous retaining region.

Preferably, on release of the male connector with the pins in the final locked position, spring means are arranged to urge the male connector outwardly. Preferably the male connector is urged outwardly by the spring means into a further locked position whereby a shoulder in the guide slots prevents or inhibits the movement of the radial pins towards the open end of the respective guide slots.

Preferably the male connector comprises a co-axial electrical power connector.

The socket may comprise a bayonet fitting.

The male connector may comprise more than two radial pins and the socket may comprise more than two guide slots.

Preferably the bite indicator assembly comprises a cover assembly for the socket. Preferably the cover assembly is arranged, in use, to seal an open end of the socket when the male connector is disengaged from the socket.

The cover assembly may comprise a sealing plug which is arranged to be engaged within the socket. The sealing plug may be resiliently engageable within the socket. The cover assembly may comprise a tether to maintain a connection between the sealing plug and the bite indicator. In particular, the tether may be arranged, in use, to retain the sealing plug to the bite indicator when the sealing plug is disengaged from the socket.

The cover assembly may comprise an engagement portion which is arranged to engage with the housing of the bite indicator. Preferably the engagement portion comprises one or more push fit engagers which engage within a respective recess provided by the housing.

The bite indicator may comprise a housing, the housing comprising a first face and a second face which face in opposite directions and wherein the socket is located on the first face of the housing.

The socket may extend in an angled orientation with the open end directed downwardly from the first face of the housing.

The electrical power transmission line may comprise an electrical wire.

Preferably the electrically powered illuminated indicator of the bobbin comprises an LED.

According to an example that does not form part of the present invention, there is provided an angling assembly comprising a rod, a reel, a fishing line, a bank stick and a bite indicator assembly comprising a bite indicator, the bite indicator comprising a housing, the housing comprising:
a first face and a second face which face in opposite directions;
a surface for supporting the fishing rod in a position in which the line of the fishing rod makes contact with a sensing device to cause the sensing device to sense movement of the line;
indicating means to indicate movement of the line; and
a location indicator to indicate the location of the bite indicator, the location indicator comprising a light which is remotely operable by a portable remote control unit;
wherein the indicating means is located on the first face of the housing and the location indicator is located on the second face.

According to a second aspect of the present invention defined in claim 15, there is provided a method of providing a bite indicator assembly comprising a bite indicator, the method comprising locating (and/or positioning) the bite indicator, the bite indicator comprising a housing, the housing comprising:
a first face and a second face which face in opposite directions;
a surface for supporting a fishing rod in a position in which a line of the fishing rod makes contact with a sensing device to cause the sensing device to sense movement of the line;
indicating means to indicate movement of the line; and
a location indicator to indicate the location of the bite indicator, characterised in that:
   the indicating means is located on the first face of the housing and the location indicator is located on the second face; and
   the method comprising remotely operating the location indicator to emit light with a portable remote control unit.

The method may comprise positioning the bite indicator with the first face facing away from a body of water being fished and for the second face to be facing towards the body of water being fished.

According to a further example that does not form part of the invention, there is provided a bite indicator assembly comprising a bite indicator and a bobbin assembly, the bobbin assembly comprising:
a bobbin comprising an electrically powered illuminated indicator;
a male connector comprising two radial pins; and
an electrical power transmission line extending between the bobbin and the male connector,
the bite indicator comprising a housing, the housing comprising an electrical socket for connection with the male connector of the bobbin assembly, the socket comprising two guide slots for engagement with the respective radial pins of the male connector, each slot comprising:
an outer open end;
an angled section; and
a final closed end
wherein each pin is initially engageable into the guide slot (preferably a respective guide slot) through the open end and the pins are movable to the final locked position through an initial push movement of the male connector followed by a rotational movement of the male connector in the socket.

### BRIEF DESCRIPTION OF THE DRAWINGS

The present invention will now be described, by way of example only, with reference to the drawings that follow, in which:
Figure 1 is a front perspective view of a preferred embodiment of a fishing bite indicator in accordance with the present invention;
Figure 2 is a rear perspective view of a preferred embodiment of a fishing bite indicator in accordance with the present invention;
Figure 3 is a rear view of a preferred embodiment of a fishing bite indicator in accordance with the present invention;
Figure 4 is a front perspective view of a remote control unit for use with a fishing bite indicator in accordance with the present invention;
Figure 5 is an exploded view of a preferred embodiment of an illuminated location indicator of a preferred embodiment of a fishing bite indicator in accordance with the present invention;
Figure 6 is a front perspective view of a preferred embodiment of a fishing bite indicator in accordance with the present invention showing a sealing plug located in the connector port;
Figure 7 is partial view of the front of a preferred embodiment of a fishing bite indicator in accordance with the present invention showing an uncovered connector port;
Figure 8 is a perspective view of a preferred embodiment of a socket of a fishing bite indicator in accordance with the present invention;
Figure 9 is a perspective view of a male connector of an illuminated bite indicator;
Figure 10 is a perspective view of an illuminated bite indicator for use with the preferred embodiment of a fishing bite indicator;
Figure 11 is a perspective view of an illuminated bite indicator for use with the preferred embodiment of a fishing bite indicator; and
Figure 12 is a perspective view of an illuminated bite indicator for use with the preferred embodiment of a fishing bite indicator.

### DESCRIPTION OF THE PREFERRED EMBODIMENTS

The present invention provides an improved fishing bite indicator 10 (alarm) which provides an illuminated indicator 40 to enable an angler to easily and reliably locate a fishing location with confidence. This enable an angler to move away at night from the fishing location, for example out on to a lake, and to directly return to the bank at the location of their fishing equipment. The illuminated indicator 40 prevents the angler having to monitor and try and remember where their fishing location is and also prevents the angler from heading towards any light/equipment of another angler. Accordingly, the location indicator 40 provides a navigation aid which helps tan angler return quickly and reliably to a correct location.

Bite indicators/bite alarms include a sensor which monitors small movements of a fishing line and may also detect the direction of movement of a fishing line. From such information, the bite indicator 10 is able to provide an alarm signal that there is a potential bite.

The alarm signal may include both an audible alarm and a visual alarm signal. The volume of the audible alarm signal may be turned down low or turned off and the angler may rely solely on the visual alarm. This visual alarm is generally provided by a light/LEDs 28 mounted on the bite indicator 10 in a position which is directly facing the angler, in normal use. In particular, the light will be provided on a front face 14 of the bite indicator 10 which faces away from the water. The angler is generally located in a position to directly view the rod, bite alarm 10 with the water beyond this such that the angler can watch the rod, bite alarm 10 and also the fishing line extending into the water together with the surface of the water as well.

Generally, the rear face 16 of the bite alarm 10 is blank since it is hidden from the angler in normal use so any controls or signals would be unseen and hidden.

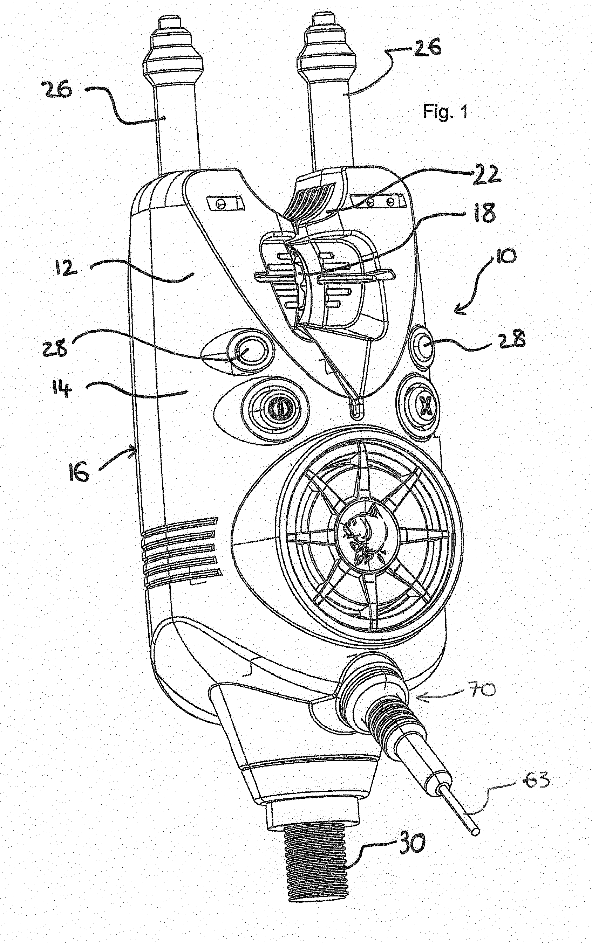

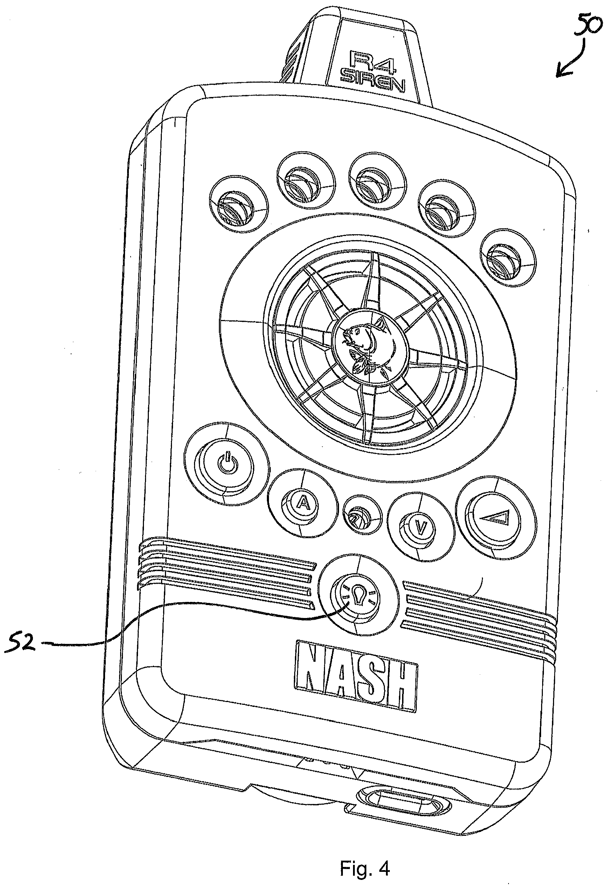

A preferred embodiment of the present invention will now be described with reference to Figure 1 to Figure 5.

The bite indicator 10 comprises a housing 12 having a first (front) face 14 and a second (rear) face 16. The front and rear faces 14, 16 are arranged to face in opposite directions. As mentioned above, the front face 14 faces the angler and the rear face 16 faces towards the water.

The preferred embodiment of the present invention includes a sensor utilising a wheel 18 which is rotated by movement of a fishing line passing over an upper circumferential arc. The wheel 18 is mounted on the housing 12 to rotate freely about an axle.

The present invention provides a location indicator 40 which is mounted on the rear (second) face 16 of the housing 12 which is used to identify the location of the bite indicator 10, and fishing location, when the angler is at a remote location and possibly on the water in a boat. In particular, it is easily possible for an angler within a boat to become disorientated at night. An illuminated indicator 40 can therefore be used to enable the angler to return to the correct location on the bank.

An angler may use a boat during the attempt to land a fish that is initially hooked whilst the angler is on the bank at the side of the water. This involves the taking the rod into the boat and out on to the water. During this time, the fish may eventually become tired and this may help in landing the fish successfully and may minimise the distress to the fish.

However, in low light and particularly at night, the angler may become disorientated on the water. This may be exacerbated by the angler concentrating on landing the fish rather than on monitoring their fishing location on the bank where they have left their fishing equipment.

This may be a particularly apparent problem since the light pollution may not be present around remote fishing locations and there may be little to no ambient light. In such location the night time can be particularly dark. Accordingly, there is a significant problem in the angler becoming lost and disorientated on a body of water particularly if it is a new and unknown location for the angler. The water may include hazards which must be avoided so there is also a safety aspect achieved by the present invention.

Alternatively, if there are several angling set ups located along or around the edge of the water, at a distance the angler may not know which may be the correct location especially if the angler has poor eyesight or is wearing glasses which can be difficult in the rain etc. Again, this may occur particularly at night where there may be some lights from torches/lanterns adjacent or within a bivvies. However, if there are several locations with these lights then it may be difficult for the angler to know with assurance which is the correct location to take the boat back to. Heading towards the wrong location may cause the boat to disturb the line and fishing location of another angler.

The present invention therefore provides an illuminated location indicator 40 on the rear face 16 of the bite indicator 10 which will identify the correct location to the angler. Furthermore, this illuminated indicator 40 can be activated with a remote control unit 50. In particular, the angler may use the remote control unit 50 to either illuminate the light or even to turn the light off. The response of the light following this control signal will reliably inform the angler of the correct location.

The illuminated indicator 50 comprises an LED for which the colour can be selected and changed. This again provides for the use of an individual and reliable signal on which the angler can rely on.

Existing bite indicators may include lights 28 although these are provided on the front face 14 of the bite indicator 10 to signal a bite to potential bite. Such lights must therefore be directed towards the angler in normal use. However, an angler may attempt to reply on these normal lights for locating the fishing location since these lights may create a general hue or glow around the bite indicator 10. However, such illuminations may not be on permanently or be manually operable at a distance. In addition, an indirect general hue or glow cannot be seen at a distance or in poor visibility (mist/fog etc.) which frequently occurs in fishing locations.

The present invention thereby provides a directed light indicator which is fixed on the bank stick to directly face on to the water. This orientation will be automatically provided without the angler having to individually set up a dedicated light. The orientation is fixed by the light being on the rear face 16 and there would be no chance of an angler fixing the bite indicator 10 to be facing the wrong way and a bite indicator 10 would not operate efficiently unless the front face 14/rear face 16 were directly perpendicular to the rod. This is ensured by a channel surface provided by the upper guide surface 22. The rod will be pointing directly towards the water being fished and therefore, the rear face 16 will also be directly orientated to face the water being fished and onto which an angler may take a boat.

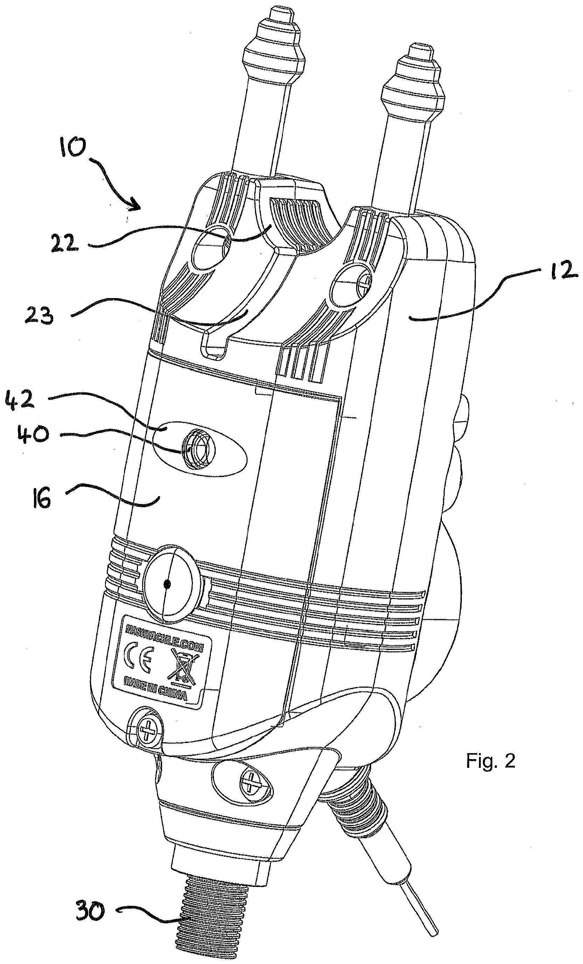

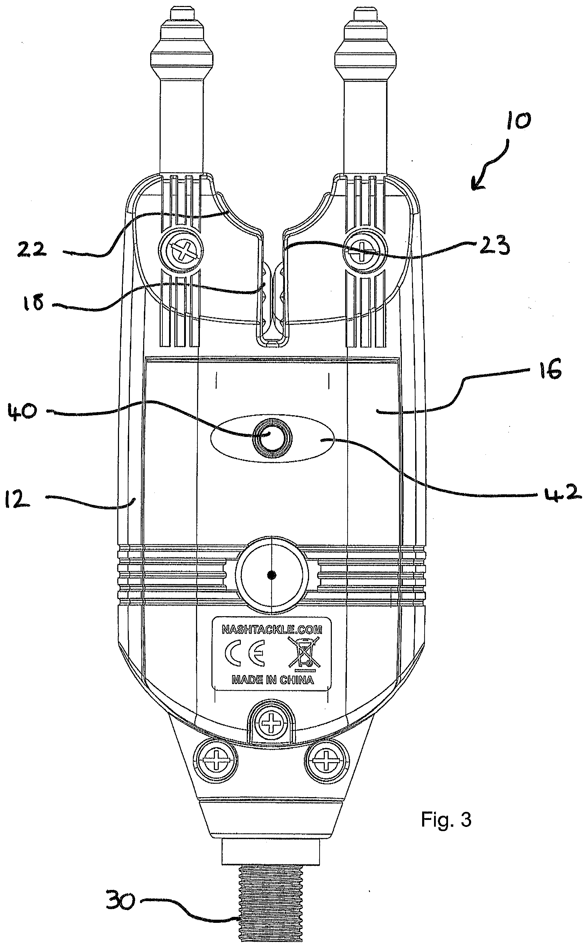

As shown in Figure 2 and Figure 3, the rear face 16 of the fishing bite indicator 10 provides the location indicator 40 at a central location which will face directly way from the fishing bite indicator 10. In particular, the rear face 16 provides a recessed area into which the location indicator 40 is mounted. The recess 42 aids the direction of the light from the location indicator 40 and provides a more concentrated light region which may aid the visibility at a distance or in weather causing poor visibility.

The location indicator 40 comprises an illuminated location indicator including a light providing visible light. In particular, the light comprises a light emitting diode (LED). The LED is mounted on the circuit board located within the housing 12.

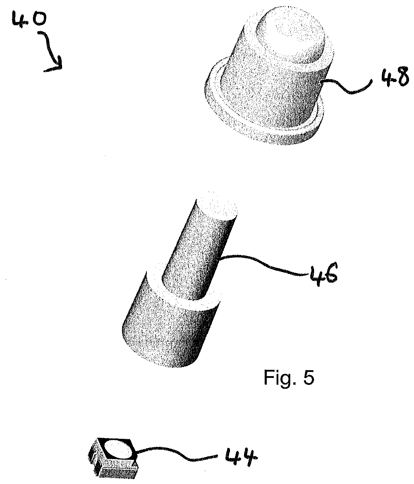

As shown in Figure 5, the location indicator comprises an LED 44, a light pipe 46 (or light guide) and a lens 48. The LED 44 is a surface mount LED. The light pipe 46 is arranged to guide and direct the light from the LED 44. The lens 48 further direct the light away from the bite indicator 10.

The homing light includes the lens 48 on the rear of the bite indicator 10, behind which will be a surface mount technology (SMT) LED on a miniature printed circuit board (PCB) that is fixed into the rear half of the housing 12. The lens 48 is sonic welded into the housing 12 to make it watertight.

The lens 48 may be inserted from the outside of the housing 12 and sonic welded in place. The lens 48 may have a flange around it to allow the sonic weld to create a water tight seal.

The LED 44 is not connected to the fishing bite circuitry. The location LED 44 acts as an illuminated indicator to allow an angler in a boat on a lake to locate their home spot, as described above.

The lens 48 comprises a plastic lens 48 which may be radio frequency (RF) welded into the rear of the housing 12 to make it water proof. Behind the lens 48, inside the housing 12 (or case), there is a miniature PCB onto which is mounted an ultra bright SMT LED 44. Light emitted by the LED 44 will pass through the lens 48 and be visible to an angler in a boat on the lake.

The preferred embodiment of the present has been described with reference to a bite indictor 10 including a wheel 18 to sense movements in the fishing line. This wheel systems rely on an individual magnet or several magnets which cooperate with a reed switch or reed switches to detect the rotation of the wheel. For these products and for the present invention, the term wheel is used to define any suitable rotatable member including a drum and does not refer to the transportation over a surface.

In alterative embodiments, the bite indicator includes a sensor system utilising a stylus over which the fishing line passes. The bite indicator 10 again comprises the housing 12 including the guide means including the groove 23 through which the fishing line is retained and guided on or towards a stylus. In use, the fishing line is urged towards the stylus such that movement of the fishing line causes vibrational movement within the stylus. It is this vibrational movement which is the source for triggering an indication of a bite.

The present invention relates primarily to the housing 12 which is present in the different types of bite indicators 10 and the present invention is not limited to either the wheel sensing system or the stylus sensing system. For descriptive purposes, the present invention is described in relation to a bite indicator 10 including a wheel sensor system.

The bite indicator includes a surface 22 on the housing 12 for supporting a fishing rod in a position in which a line of the fishing rod makes contact with the wheel 18 to cause the wheel 18 to rotate in response to movement of the line and the sensor systems produces an electrical signal with rotation of the wheel (or vibration of the stylus). The wheel 18 is in the form of a drum mounted in the housing 12 for rotation about an axis that extends horizontally and transverse to the line of the fishing rod when the bite indicator 10 is in use.

The fishing line is arranged to extend from the first face 14 of the housing 12 over the sensor system (wheel or stylus) and then away for the second face 16 of the housing 12 towards the hook/water.

A mounting device comprising a screw thread 30 is provided at the lower end of the housing 12 to allow the housing 12 to be secured to a rod rest/bank stick.

At the upper end of the bite indicator 10, there are two projections 26. The projections 26 prevent a rod resting in a recess/channel which forms the supporting surface 22 from moving from side to side and coming away from the bite indicator 10, even when the fishing line is dragged sideways. The projections 26 also resist accidental displacement of the rod still further, so that the rod is captured and cannot escape when a lateral force is applied to it but can be pulled out readily if raised vertically by the angler.

A groove 23 positioned centrally beneath the recessed supporting surface 22 guides/urges and allows the line of the fishing rod to make contact with the sensor system (e.g. the freely rotatable wheel 18).

Accordingly, the fishing bite indicator 10 has a specific and set orientation when being used by an angler. This provides for a definite orientation of the first/front face 14 and the second/rear face of the housing 12. When a rod is removed from the supporting surface 22 of the bite indicator 10 the bite indicator 10 remains fixed in position at the top of a bank stick. Accordingly, the securement to the bank stick provides the fixed orientation of the faces 14, 16 of the bite indicator 10 and ensure that the second/rear face 16 of the bite indicator remains facing the water following the removal of the rod.

The bite indicator 10 may include a remote control unit 50 and/or may communicate with a mobile telephone using Bluetooth.

The remote control unit 50 has a transmitter/receiver circuit which communicates with the bite indicator 10 and specifically with a circuit in the housing 12 of the bite indicator 10. The remote control unit 50 serves both to control the bite indicator 10 and to display and record various settings. The remote control unit 50 produces sounds and visual notifications, flashing lights etc. as well as alarm signals being produced by the bite indicator 10 to warn the angler of a bite when out of sight of the rod and the bite indicator 10.

The remote control unit 50 may also enable the angler to change and control various settings, for example the tone and volume, respectively, of the emitted sound. The remote control unit provides a button 52 to enable the location indicator to be turned on and activated. A single press of the button 52 may turn the location light 40 on and similarly, a further press of the button 52 may turn the location 40 light off.

The location light 40 is a multi-coloured RGB LED 44 which may incorporate prism technology programmable by the user.

The remote control unit 50 allows the user to update all the user programmable parameters e.g. volume of sounder, tones, trigger points. The bite indicator 10 may comprise the control system to allow the user to set the colours of the LED 34 (useful in a multi-detector environment).

Accordingly, the present invention provides, on the rear face 16 of the bite indicator 10, a bright 'homing light' for anglers who are on a lake in a boat laying bait etc., or moving around the lake to set lines. At dusk or in the night the 'homing light' can be illuminated to allow the angler to identify their home position on the bank.

The present invention thereby provides a unique feature of providing a location indicator or navigation indicator. The present invention provides a light on the rear of the alarm i.e. the part of the alarm that faces the lake. The angler ensures that they have the remote unit with them when they are out in the lake. If the angler cannot find "home", the angler can press the remote button to illuminate the light on the alarm. This then enable the angler to return to the correct location.

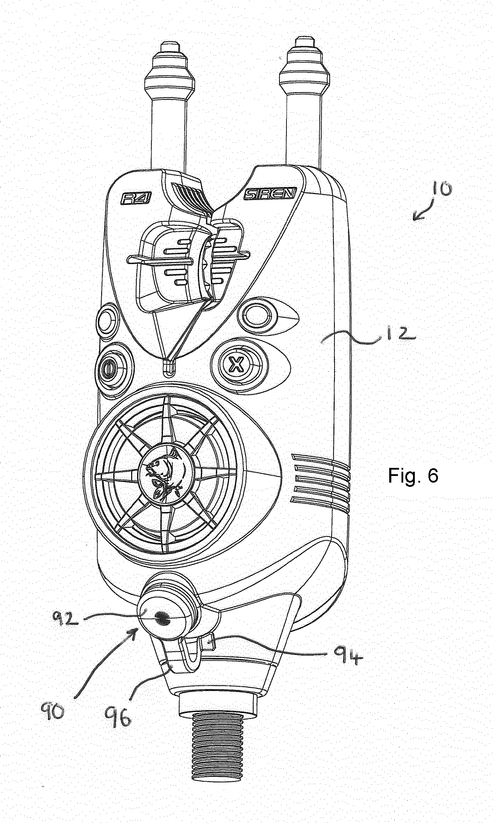

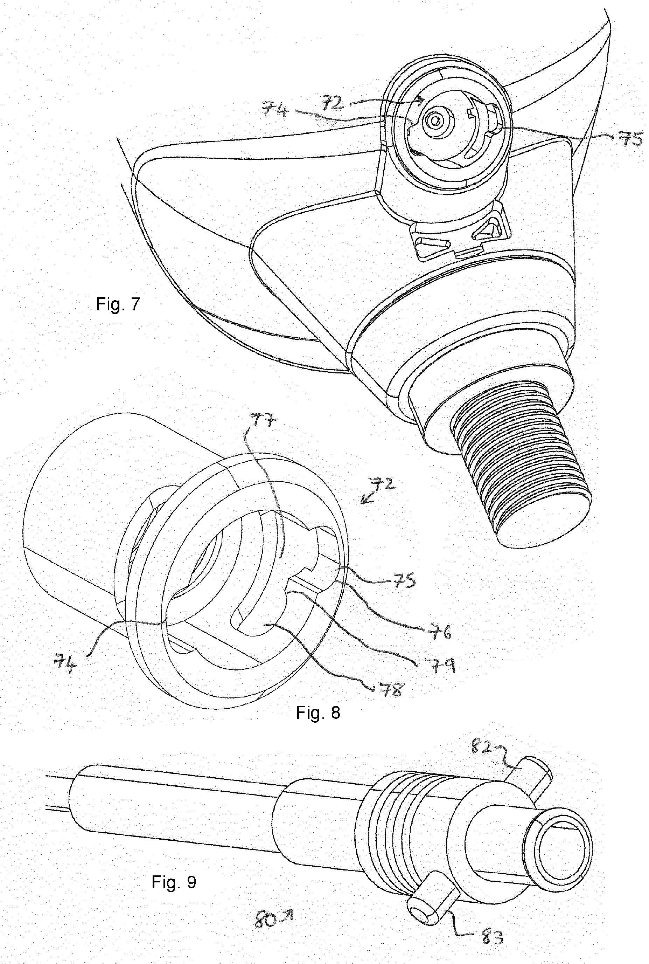

As shown in more detail in Figure 1, Figure 2 and Figure 6 to Figure 12, the present invention also provides an improved connector 70 for an illuminated indicator 60. In particular, the illuminated indicator 60 includes a bobbin 62 which can be suspended from the fishing line. Anglers suspend bobbins 62 from the section of the fishing line between the reel and the bite alarm 10, by means of a releasable line clip. The bobbin 62 provides a visual bite indicator that moves vertically up and down as the tension in the line changes. Bobbins 62 may just hang from the fishing line and be anchored by means of a cord or they may be mounted on an arm that is pivoted or sprung to maintain the fishing line taut. Bobbins 62 may incorporate an illumination device/light source which is particularly useful when fishing in poor light conditions. The bite alarm 10 comprises a socket 72 for a cord/arm of a bobbin assembly 60 in which a bobbin 62 is suspended from the fishing line by a releasable line clip.

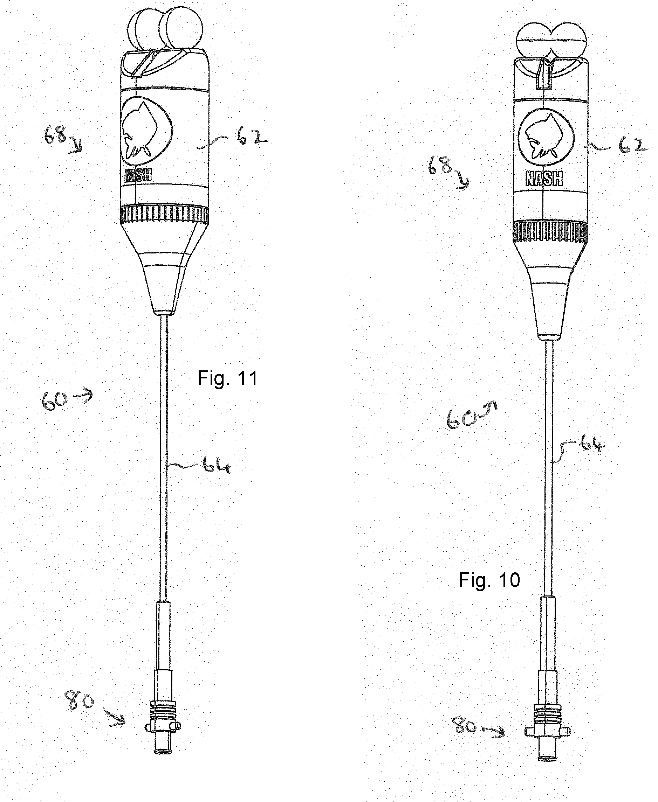

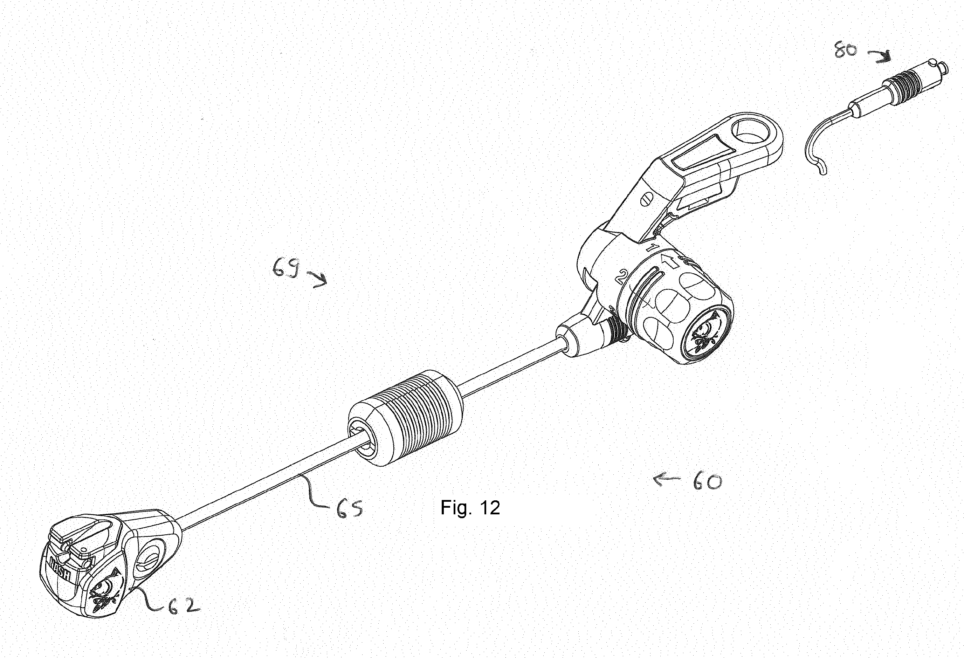

As shown in Figure 10 and Figure 11, the bobbin 62 is provided on an end of a cord 64 or other flexible section. A (male) connector 80 is provided on a proximal end of the cord and the bobbin is secured to the distal end. As shown in Figure 12, the bobbin 62 is mounted on the end of a swinging arm 65 and is connected by a releasable line clip to the section of the fishing line situated between the reel and the bite alarm 10. As mentioned above, the bobbin 62 is anchored by means of a cord which encloses/shrouds an electrical transmission wire 63 or the bobbin 62 is mounted on an arm 65 that encloses/shrouds the electrical transmission wire 63 and the arm 65 is pivoted or sprung to maintain the fishing line taut.

The bobbin 62 acts to maintain the fishing line under constant tension and in contact with the sensor of the bite alarm 10. The line clip is typically formed by a ball or two opposing balls biased magnetically or resiliently against one another ball or against a flat plate. The line clip arrangement is able to withstand the weight of the bobbin 62 and the downward force of the cord 64/swinging arm 65 but will allow the line to separate from the bobbin 62, by moving in opposition to the magnetic or resilient bias force, when the angler raises the rod off the bite alarm 10.

Aside from maintaining a steady line tension, the bobbin 62 acts as an indicator. Though the bite alarm 10 could on its own suffice in signalling to the angler when a line movement has taken place, the bobbin 62 provides visual confirmation that a line movement is taking place and also informs the angler of the direction and speed of the line movement.

The angler will not however have the benefit of the additional indication provided by the bobbin 62 when fishing in the dark or under poor light conditions. To avoid this problem, it is known to place a chemical light in the bobbin 62 or for the cord 64/arm 65 to include an optical fibre to transmit light from a source in the bite alarm 10 to a diffuser provided in the bobbin 62. Both of these avoid the problem of providing an electrical connector which would may exposed for periods of time. Such connectors expose the electrical connectors to the elements which can be harsh in angling environments. This exposure can lead to a failure of the bite alarm 10 which can be relatively expensive. Accordingly, the provision of electrical connectors is not desired with bite alarms 10.

The present invention provides an improved electrical connector 70 which aims to avoid the known problems. In addition, the connector 70 prevents inadvertent disconnection between the bobbin 62 and the bite alarm 10 which can occur, for example during a strike or other movement of the rod and line relative to the bite alarm. The present invention also aims to provide a reliable and easy connection which can be used in typical angling environments.

The present invention provides a light emitting diode (LED) mounted in the bobbin and power is transmitted to the LED using an electrical wire 63 connected to the bite alarm 10. The connection is critical and, in the preferred embodiments, this is provided by a connection assembly/connector 70 including a bayonet style arrangement. Previously screw fittings or push fittings have been used. Screw fittings provide very secure connections but do not facilitate the easy removal of the bobbin assembly. Such fittings may also be dimensionally quite large which encourages the ingress of water and dirt/debris. Push fittings do allow the easy connection and disconnection but these fittings may be prone to accidental or inadvertent disconnection which may unknowingly cause the light to not be operational in the bobbin and also may provide an opportunity for the electrical connectors to be exposed whilst accidentally disconnected. The bayonet fitting of a preferred embodiment of the present invention is small and may make the handling of the connection quite difficult when being manipulated in harsh environments and with the added problem of angler wearing gloves. However, the connection is very quick and easy due to guides provided in the connection port/socket 72 of the bite alarm 10.

The male connector 80 on the proximal end of the connecting wire 63 is arranged to engage within the socket 72 provided by the bite alarm 10. The socket 72 is provided on the front face 14 of the housing 12 of the bite alarm 10 and is angled downwardly. This provides some shrouding from precipitation when the socket 72 is uncovered. A position for the socket 72 located underneath the bite alarm 10 may provide the shrouding effect but such a position is inaccessible and would result in the connection being intricate and difficult to perform. In particular, due to the limited space located around the base of the housing 12 of the bite alarm 10 and the bank stick, such a position may result in the connection being very difficult or could result in only a partial connection which could cause damage to the equipment.

The arrangement of pins 82, 83 and slots 74, 75 and the location of the socket 72 on the front face 14 of the bite alarm 10 and also the downwardly angled orientation combine to prevent the inadvertent disconnection of the connector 70. For example, the arrangement prevents the connector 70 from being pulled out during a strike.

The socket 72 includes guideways or slots 74, 75 for pin(s) 82, 83 or lug(s) provided on the male connector 80. In the preferred embodiment, the male connector 80 includes two radial pins 82, 83 that extend on opposing sides of the male connector 80. The male connector 80 provides a co-axial connector for the transmission of electrical power. The radial pins 82, 83 are spaced 180 degrees apart around the outer peripheral surface of the connector 80.

The socket 72 in the bite alarm 10 provides a corresponding guideway or slot 74, 75 for each of the radial pins 82, 83. Each slot 74, 75 is generally of an L shape with an outer open end 76 for initially receiving and accepting one of the pins 82, 83. This receiving portion is of an increased width to facilitate the engagement of the pins 82, 83. The slots 74, 75 then provide a turn and specifically a perpendicular corner section 77 such that the pins 82, 83 must now be moved by a rotational/turning movement rather than the initial push movement for the initial engagement. In particular, the turn or twist movement of the male connector 80 is less than a full turn or rotation and may be in the order of 90 degrees. This limited angular movement results in the connector 70 being quick and simple to manipulate and use. The socket 72 may comprise spring means to urge the male connector 80 outwardly.

Following a turning movement in the order of a 90 degree turn, the slots 74, 75 are provided with final closed end section 78 which help to maintain the engagement of the male connector 80 in the socket 72. These final sections 78 include a small section which extends back outwardly towards the outer face/front face 14 of the housing 12. Specifically, the final end sections 78 comprise a shoulder 79 to prevent the pins 82, 83 being urged out of the open ends 76. The spring means naturally urges and pushes the pins 82, 83 into the bulbous space 78 and this prevents the spring means from naturally pushing the pins 82, 83 back out through the open ends of the slots 74, 75. Accordingly, the connector 70 is held securely and reliably and the open ends of the slots 74, 75 aid this engagement of the pins 82, 83 even in difficult conditions.

The present invention also provides a cover assembly 90 for the open port/socket 72 of the bite alarm 10 for use when the connector 70 is not in use. The cover assembly 90 includes a sealing plug 92 which is tethered to the bite alarm 10 to prevent the loss or misplacement of the sealing plug 92.

The cover assembly 90 includes an anchor portion 94 which engages with the housing 12 of the bite alarm 10. For example, the anchor portion 94 may include one or more push fit connectors which are engaged in recesses provided in the housing 12 of the bite alarm 10. A flexible/resilient tether portion 96 connects the anchor portion 94 to the sealing plug 92. The sealing plug 92 can then be resiliently engaged with the open socket 72 when the male connector 80 is not in use and the sealing plug 92 is retained adjacent to the socket 72 when the male connector 80 is engaged in the socket 72. The tethered rubber bung/sealing plug 92 seals the connector socket 72 in the bite alarm 10 and prevents ingress of water and mud etc.

The socket 72 has the bayonet feature that ensures that once the male connector 80 located at the end of the illuminated bobbin 68 or the illuminated swinger 69 is inserted and rotated it is locked into the socket 72.

One aim of the present invention is to provide a connector assembly 70 which will not disconnect in normal use. The connector 70 of the present invention creates an electrical connection and not an optical connection. The male connector 80 and socket 72 may be gold plated to provide a high quality, noise free, electrical connection.

One of the main benefits of the present invention is that it is very compact compared to the more conventional jack plug and socket that may be found on existing bite detectors.

The connection provides 6v power to any device that is plugged into the bite alarm 10 and, for example, in one embodiment the connector 70 may comprise a micro miniature co-axial connector. As mentioned above, this electrical power may be provided to an illuminated bobbin 68 or an illuminated swinger 69.

Figure 10 shows a 14mm illuminated bobbin 68, Figure 11 shows an 18mm illuminated bobbin 68 and Figure 12 shows an illuminated swinger 69. These may be provided with LEDs in a range of colours to match the colours of the programmable LEDs on the bite alarm 10. All of these include a common male connector 80 and associated lugs/pins 92, 83 for the bayonet feature that engages into the socket 72 on the bite alarm 10.

In synergy with the illuminated indicator for locating the bite alarm 10, the present invention also provides an improved connector 70 for an illuminated indicator 60 for visually demonstrating movement of the fishing line. Overall, the present invention provides a bite indicator 10 with improved illumination for both line movement and location of the bite indictor in a single unit. Such a bite alarm addresses problems with illuminating indicators/lights of prior art alarms.

## Claims

1. A bite indicator assembly comprising a bite indicator (10) comprising a housing (12), the housing (12) comprising:
a first face (14) and a second face (16) which face in opposite directions;
a surface (22) for supporting a fishing rod in a position in which a line of the fishing rod makes contact with a sensing device (18) to cause the sensing device (18) to sense movement of the line;
indicating means (28) to indicate movement of the line; and
a location indicator (40) to indicate the location of the bite indicator (10), the location indicator (40) comprising a light which is remotely operable by a portable remote control unit (50); **characterised in that**:
the indicating means (28) is located on the first face (14) of the housing (12) and the location indicator (40) is located on the second face (16).

2. A bite indicator assembly according to Claim 1 in which the location indicator (40) is mounted in a central position on the second face (16) and in which the second face (16) of the housing (12) provides a recess (42) which surrounds the location indicator (40) and the recess (42) provides a guide surface to guide the light away from the housing (12) and prevent light from the location indicator (40) being dispersed laterally and/or vertically.

3. A bite indicator assembly according to Claim 1 or Claim 2 in which the location indicator further comprises a lens (48) arranged to focus a light of the location indicator (40) and direct the light directly away from indicator (40) and inhibit the light being dispersed laterally towards the sides, upper, lower locations relative to the second face of the housing (12).

4. A bite indicator assembly according to any preceding claim in which the bite indicator (10) is arranged, in use, for the first face (14) to be facing away from a body of water being fished and for the second face (16) to be facing towards the body of water being fished.

5. A bite indicator assembly according to claim 3 in which the indicating means (28) comprises at least one LED and in which the location indicator (40) comprises an LED (44)and a light pipe, wherein the light pipe (46) is arranged to direct light from the LED (44) outwardly and guide the light away from the bite indicator (40) and the light pipe (46) is located between the LED (44) and the lens (48).

6. A bite indicator assembly according to any preceding claim in which the remote control unit (50) comprises an actuator (52) to enable a user to operate the location indicator (40), the location indicator (40) comprising a light and the actuator (52) enables a user to turn the light on and to turn the light off.

7. A bite indicator assembly according to any preceding claim in which the bite indicator (10) comprises securement means (30) for securing the housing (12) to a ground engaging member comprising a bank stick.

8. A bite indicator assembly according to any preceding claim in which the surface (22) on the housing (12) is arranged to support a fishing rod in a position in which a line of the fishing rod makes contact with the sensing device (18) to cause the sensing device (18) to sense movement of the line and a sensing system produces an electrical signal with movement of the line; the surface (22) comprises a recessed surface on a third face of the housing (12) and, in which, the third face extends between the first face (14) and the second face (16), in which the surface (22) comprises a channel which extends between the first face (14) and the second face (16) of the housing (12) and in which the channel retains a rod in a stable orientation relative to the housing (12) and also relative to the ground/body of water.

9. A bite indicator assembly according to any preceding claim in which the housing (12) comprises a groove (23) within which the fishing line is arranged to locate and wherein the groove (23) extends between the first face (14) and the second face (16) of the housing (12).

10. A bite indicator assembly according to any preceding claim in which the bite indicator assembly comprises a bobbin assembly, the bobbin assembly comprising:
a bobbin (62) comprising an electrically powered illuminated indicator;
a male connector (80) comprising two radial pins (82, 83); and
an electrical power transmission line extending between the bobbin (62) and the male connector (80),
the housing (12) comprising an electrical socket (72) for connection with the male connector (80) of the bobbin assembly, the socket (72) comprising two guide slots (74, 75) for engagement with the respective radial pins (82, 83) of the male connector (80), each slot (74, 75) comprising:
an outer open end (76);
an angled section (77); and
a final closed end (78),
wherein each pin (82, 83) is initially engageable into a respective guide slot (74, 75) through the open end (76) and the pins (82, 83) are movable to the final locked position through an initial push movement of the male connector (80) followed by a rotational movement of the male connector (80) in the socket (72).

11. A bite indicator assembly according to Claim 10 in which each guide slot (74, 75) has a transverse width to guide an outer periphery of the respective pin (82, 83) through the respective slot (74, 75), in which the transverse width of the guide slot (74, 75) changes from the open end (76) to the final closed end (78) and the transverse width of the guide slot (74, 75) at the open end (76) is greater than the width of the guide slot (74, 75) in an intermediate section between the open end (76) and the final closed end (78), in which the intermediate section comprises the angled section (77).

12. A bite indicator assembly according to Claim 10 or claim 11 in which the male connector (80) comprises a co-axial electrical power connector.

13. A bite indicator assembly according to any one of Claim 10 to Claim 12 in which the socket (72) comprises a bayonet fitting.

14. A bite indicator assembly according to any one of Claim 10 to Claim 13 in which the socket (72) is located on the first face (14) of the housing (12) and in which the socket (72) extends in an angled orientation with an open end directed downwardly from the first face (14) of the housing (12).

15. A method of providing a bite indicator assembly comprising a bite indicator (10), the method comprising positioning the bite indicator (10), the bite indicator (10) comprising a housing (12), the housing (12) comprising:
a first face (14) and a second face (16) which face in opposite directions;
a surface (22) for supporting a fishing rod in a position in which a line of the fishing rod makes contact with a sensing device (18) to cause the sensing device (18) to sense movement of the line;
indicating means (28) to indicate movement of the line; and
a location indicator (40) to indicate the location of the bite indicator (10), **characterised in that**:
the indicating means (28) is located on the first face (14) of the housing (12) and the location indicator (40) is located on the second face (16); and
the method comprising remotely operating the location indicator (40) to emit light with a portable remote control unit (50).

## Patentansprüche

1. Bissanzeigeranordnung, umfassend einen Bissanzeiger (10), welcher ein Gehäuse (12) umfasst, wobei das Gehäuse (12) folgendes umfasst:
eine erste Seite (14) und eine zweite Seite (16), welche in entgegengesetzte Richtungen weisen;
eine Fläche (22) zum Abstützen einer Angelrute in einer Position, in welcher eine Schnur der Angelrute in Kontakt mit einer Sensoreinrichtung (18) gerät, um zu bewirken, dass die Sensoreinrichtung (18) die Bewegung der Schnur erfasst;
ein Anzeigemittel (28), um die Bewegung der Schnur anzuzeigen; und
einen Lageanzeiger (40), zum Anzeigen der Lage des Bissanzeigers (10), wobei der Lageanzeiger (40) ein Licht umfasst, welches durch eine tragbare Fernbedienungseinheit (50) fernsteuerbar ist;
**dadurch gekennzeichnet,**
**dass** das Anzeigemittel (28) sich auf der ersten Seite (14) des Gehäuses (12) befindet und der Lageanzeiger (40) sich auf der zweiten Seite (16) befindet.

2. Bissanzeigeranordnung nach Anspruch 1,
bei welcher der Lageanzeiger (40) in einer zentralen Position der zweiten Seite (16) montiert ist, und bei welcher die zweite Seite (16) des Gehäuses (12) eine Aussparung (42) bereitstellt, die den Lageanzeiger (40) umgibt, und die Aussparung (42) eine Führungsfläche bereitstellt, um das Licht von dem Gehäuse (12) weg zu führen und zu verhindern, dass Licht aus dem Lageanzeiger (40) zur Seite und/oder in vertikaler Richtung gestreut wird.

3. Bissanzeigeranordnung nach Anspruch 1 oder Anspruch 2, bei welcher der Lageanzeiger ferner eine Linse (48) umfasst, die dazu eingerichtet ist, Licht des Lageanzeigers (40) zu fokussieren und das Licht direkt weg von dem Anzeiger (40) zu dirigieren und zu verhindern, dass Licht relativ zur zweiten Fläche des Gehäuses (12) in seitlicher Richtung zu den Seiten, sowie oberen und unteren Stellen gestreut wird.

4. Bissanzeigeranordnung nach einem der vorigen Ansprüche, bei der der Bissanzeiger (10) so angeordnet ist, dass die erste Seite (14) im Gebrauchszustand von einem Gewässer, in dem gefischt wird, abgewandt ist und die zweite Seite (16) dem Gewässer, in dem gefischt wird, zugewandt ist.

5. Bissanzeigeranordnung nach Anspruch 3,
bei der das Anzeigemittel (28) mindestens eine LED umfasst und bei der der Lageanzeiger (40) eine LED (44) und einen Lichtleiter umfasst, wobei der Lichtleiter (46) so angeordnet ist, dass er Licht von der LED (44) nach außen lenkt und das Licht vom Bissanzeiger (40) wegleitet, und der Lichtleiter (46) zwischen der LED (44) und der Linse (48) angeordnet ist.

6. Bissanzeigeranordnung nach einem der vorigen Ansprüche, bei der die Fernbedienungseinheit (50) einen Aktuator (52) umfasst, um einem Benutzer zu ermöglichen, den Lageanzeiger (40) zu bedienen, wobei der Lageanzeiger (40) ein Licht umfasst und der Aktuator (52) es einem Benutzer ermöglicht, das Licht ein- und auszuschalten.

7. Bissanzeigeranordnung nach einem der vorherigen Ansprüche,
wobei der Bissanzeiger (10) Befestigungsmittel (30) zum Befestigen des Gehäuses (12) an einem Bodeneingriffselement mit einem Bankstab umfasst.

8. Bissanzeigeranordnung nach einem der vorherigen Ansprüche,
bei der die Oberfläche (22) am Gehäuse (12) so angeordnet ist, dass sie eine Angelrute in einer Position hält, in der eine Schnur der Angelrute mit der Sensorvorrichtung (18) in Kontakt kommt, um die Sensorvorrichtung (18) zu veranlassen, die Bewegung der Schnur zu erfassen, und ein Sensorsystem ein elektrisches Signal mit der Bewegung der Schnur erzeugt; die Oberfläche (22) eine vertiefte Oberfläche auf einer dritten Seite des Gehäuses (12) umfasst, und wobei sich die dritte Seite zwischen der ersten Seite (14) und der zweiten Seite (16) erstreckt, wobei die Oberfläche (22) einen Kanal umfasst, der sich zwischen der ersten Seite (14) und der zweiten Seite (16) des Gehäuses (12) erstreckt, und wobei der Kanal eine Angelrute in einer stabilen Ausrichtung relativ zu dem Gehäuse (12) und auch relativ zu dem Boden/Gewässer beibehält.

9. Bissanzeigeranordnung nach einem der vorherigen Ansprüche,
wobei das Gehäuse (12) eine Nut (23) aufweist, in der die Angelschnur so angeordnet ist, dass sie sich darin befindet, und wobei sich die Nut (23) zwischen der ersten Seite (14) und der zweiten Seite (16) des Gehäuses (12) erstreckt.

10. Bissanzeigeranordnung nach einem der vorherigen Ansprüche,
wobei die Bissanzeigeranordnung eine Spulenanordnung umfasst, wobei die Spulenanordnung folgendes umfasst:
einen Spulenkörper (62) mit einer elektrisch betriebenen Leuchtanzeige;
einen Steckverbinder (80) mit zwei radialen Stiften (82, 83); und
eine elektrische Stromübertragungsleitung, die sich zwischen dem Spulenkörper (62) und dem Steckverbinder (80) erstreckt,
wobei das Gehäuse (12) einen elektrischen Sockelteil (72) zur Verbindung mit dem Steckverbinder (80) der Spulenanordnung umfasst, wobei der Sockelteil (72) zwei Führungsschlitze (74, 75) zum Eingriff mit den jeweiligen radialen Stiften (82, 83) des Steckverbinders (80) umfasst, wobei jeder Schlitz (74, 75) folgendes umfasst:
ein äußeres offenes Ende (76);
einen abgewinkelten Abschnitt (77); und
ein abschließendes geschlossenes Ende (78),
wobei jeder Stift (82, 83) zu Anfang durch das offene Ende (76) hindurch in einen entsprechenden Führungsschlitz (74, 75) in Eingriff gebracht werden kann und die Stifte (82, 83) in die endgültige verriegelte Position durch eine anfängliche Druckbewegung des Steckverbinders (80) und anschließender Drehbewegung des Steckverbinders (80) in dem Sockelteil (72) bewegt werden können.

11. Bissanzeigeranordnung nach Anspruch 10,
bei der jeder Führungsschlitz (74, 75) eine Querbreite aufweist, um einen Außenumfang des jeweiligen Stifts (82, 83) durch den jeweiligen Schlitz (74, 75) zu führen, wobei sich die Querbreite des Führungsschlitzes (74, 75) vom offenen Ende (76) zum abschließenden geschlossenen Ende (78) ändert und die Querbreite des Führungsschlitzes (74, 75) am offenen Ende (76) größer ist als die Breite des Führungsschlitzes (74, 75) in einem Zwischenabschnitt zwischen dem offenen Ende (76) und dem abschließenden geschlossenen Ende (78), wobei der Zwischenabschnitt den abgewinkelten Abschnitt (77) umfasst.

12. Bissanzeigeranordnung nach Anspruch 10 oder Anspruch 11,
bei der der Steckverbinder (80) einen koaxialen Netzanschlussstecker umfasst.

13. Bissanzeigeranordnung nach einem der Ansprüche 10 bis 12,
bei der der Sockelteil (72) einen Bajonettverschluss aufweist.

14. Bissanzeigeranordnung nach einem der Ansprüche 10 bis 13,
bei welcher das Sockelteil (72) sich auf der ersten Seite (14) des Gehäuses (12) befindet und bei welcher sich das Sockelteil (72) in einer gewinkelten Orientierung erstreckt, wobei ein offenes Ende von der ersten Seite (14) des Gehäuses (12) abwärts gerichtet ist.

15. Verfahren zur Bereitstellung einer
Bissanzeigeranordnung, die einen Bissanzeiger (10) umfasst, wobei das Verfahren die Positionierung des Bissanzeigers (10) umfasst, wobei der Bissanzeiger (10) ein Gehäuse (12) umfasst, wobei das Gehäuse (12) folgendes umfasst:
eine erste Seite (14) und eine zweite Seite (16), welche in entgegengesetzte Richtungen weisen;
eine Fläche (22) zum Abstützen einer Angelrute in einer Position, in welcher eine Schnur der Angelrute in Kontakt mit einer Sensoreinrichtung (18) gerät, um zu bewirken, dass die Sensoreinrichtung (18) die Bewegung der Schnur erfasst;
ein Anzeigemittel (28), um die Bewegung der Schnur anzuzeigen; und
einen Lageanzeiger (40) zum Anzeigen der Lage des Bissanzeigers (10),
**dadurch gekennzeichnet,**
**dass** das Anzeigemittel (28) sich auf der ersten Seite (14) des Gehäuses (12) befindet und der Lageanzeiger (40) sich auf der zweiten Seite (16) befindet; und das Verfahren umfasst, dass der Lageanzeiger (40) fern bedient wird, um Licht mittels einer tragbaren Fernbedienungseinheit (50) auszustrahlen.

## Revendications

1. - Ensemble indicateur de touche comprenant un indicateur de touche (10) comprenant un boîtier (12), le boîtier (12) comprenant :
une première face (14) et une deuxième face (16) qui sont orientées dans des directions opposées ;
une surface (22) pour supporter une canne à pêche dans une position dans laquelle une ligne de la canne à pêche est en contact avec un dispositif de détection (18) pour amener le dispositif de détection (18) à détecter un mouvement de la ligne ;
un moyen d'indication (28) pour indiquer un mouvement de la ligne ; et
un indicateur d'emplacement (40) pour indiquer l'emplacement de l'indicateur de touche (10), l'indicateur d'emplacement (40) comprenant une lumière qui peut être actionnée à distance par une unité de commande à distance portable (50) ; **caractérisé par le fait que** :
le moyen d'indication (28) est situé sur la première face (14) du boîtier (12) et l'indicateur d'emplacement (40) est situé sur la deuxième face (16).

2. - Ensemble indicateur de touche selon la revendication 1, dans lequel l'indicateur d'emplacement (40) est monté dans une position centrale sur la deuxième face (16) et dans lequel la deuxième face (16) du boîtier (12) présente un renfoncement (42) qui entoure l'indicateur d'emplacement (40), et le renfoncement (42) présente une surface de guidage pour guider la lumière à l'opposé du boîtier (12) et empêcher de la lumière provenant de l'indicateur d'emplacement (40) d'être dispersée latéralement et/ou verticalement.

3. - Ensemble indicateur de touche selon la revendication 1 ou la revendication 2, dans lequel l'indicateur d'emplacement comprend en outre une lentille (48) agencée pour focaliser une lumière de l'indicateur d'emplacement (40) et diriger la lumière directement à l'opposé de l'indicateur (40) et empêcher la lumière d'être dispersée latéralement vers les emplacements latéraux, supérieur et inférieur par rapport à la deuxième face du boîtier (12).

4. - Ensemble indicateur de touche selon l'une quelconque des revendications précédentes, dans lequel l'indicateur de touche (10) est agencé, en utilisation, de telle sorte que la première face (14) est orientée à l'opposé d'un plan d'eau pêché et que la deuxième face (16) est orientée vers le plan d'eau pêché.

5. - Ensemble indicateur de touche selon la revendication 3, dans lequel le moyen d'indication (28) comprend au moins une DEL, et dans lequel l'indicateur d'emplacement (40) comprend une DEL (44) et un conduit de lumière, le conduit de lumière (46) étant agencé pour diriger de la lumière provenant de la DEL (44) vers l'extérieur et guider la lumière à l'opposé de l'indicateur de touche (40), et le conduit de lumière (46) étant situé entre la DEL (44) et la lentille (48).

6. - Ensemble indicateur de touche selon l'une quelconque des revendications précédentes, dans lequel l'unité de commande à distance (50) comprend un actionneur (52) pour permettre à un utilisateur de faire fonctionner l'indicateur d'emplacement (40), l'indicateur d'emplacement (40) comprenant une lumière et l'actionneur (52) permettant à un utilisateur d'allumer la lumière et d'éteindre la lumière.

7. - Ensemble indicateur de touche selon l'une quelconque des revendications précédentes, dans lequel l'indicateur de touche (10) comprend un moyen de fixation (30) pour fixer le boîtier (12) à un élément de prise au sol comprenant un pique de support.

8. - Ensemble indicateur de touche selon l'une quelconque des revendications précédentes, dans lequel la surface (22) du boîtier (12) est agencée pour supporter une canne à pêche dans une position dans laquelle une ligne de la canne à pêche est en contact avec le dispositif de détection (18) pour amener le dispositif de détection (18) à détecter un mouvement de la ligne et un système de détection produit un signal électrique avec un mouvement de la ligne ; la surface (22) comprend une surface renfoncée sur une troisième face du boîtier (12), et la troisième face s'étendant entre la première face (14) et la deuxième face (16), la surface (22) comprenant un canal qui s'étend entre la première face (14) et la deuxième face (16) du boîtier (12), et le canal retenant une canne à pêche dans une orientation stable par rapport au boîtier (12) et également par rapport au sol/plan d'eau.

9. - Ensemble indicateur de touche selon l'une quelconque des revendications précédentes, dans lequel le boîtier (12) comprend une rainure (23) dans laquelle la ligne de pêche est amenée à se loger, et la rainure (23) s'étendant entre la première face (14) et la deuxième face (16) du boîtier (12).

10. - Ensemble indicateur de touche selon l'une quelconque des revendications précédentes, dans lequel l'ensemble indicateur de touche comprend un ensemble bobine, l'ensemble bobine comprenant :
une bobine (62) comprenant un indicateur lumineux alimenté électriquement ;
un connecteur mâle (80) comprenant deux broches radiales (82, 83) ; et
une ligne de transmission d'énergie électrique s'étendant entre la bobine (62) et le connecteur mâle (80),
le boîtier (12) comprenant une prise électrique (72) pour une connexion avec le connecteur mâle (80) de l'ensemble bobine, la prise (72) comprenant deux fentes de guidage (74, 75) pour un engagement avec les broches radiales (82, 83) respectives du connecteur mâle (80), chaque fente (74, 75) comprenant :
une extrémité ouverte extérieure (76) ;
une section inclinée (77) ; et
une extrémité fermée finale (78),
chaque broche (82, 83) étant apte à être initialement engagée dans une fente de guidage (74, 75) respective par l'intermédiaire de l'extrémité ouverte (76) et les broches (82, 83) étant mobiles jusqu'à la position verrouillée finale par l'intermédiaire d'un mouvement de poussée initial du connecteur mâle (80) suivi d'un mouvement de rotation du connecteur mâle (80) dans la prise (72).

11. - Ensemble indicateur de touche selon la revendication 10, dans lequel chaque fente de guidage (74, 75) a une largeur transversale pour guider une périphérie extérieure de la broche (82, 83) respective à travers la fente (74, 75) respective, la largeur transversale de la fente de guidage (74, 75) variant de l'extrémité ouverte (76) à l'extrémité fermée finale (78) et la largeur transversale de la fente de guidage (74, 75) à l'extrémité ouverte (76) étant supérieure à la largeur de la fente de guidage (74, 75) dans une section intermédiaire entre l'extrémité ouverte (76) et l'extrémité fermée finale (78), la section intermédiaire comprenant la section inclinée (77) .

12. - Ensemble indicateur de touche selon la revendication 10 ou la revendication 11, dans lequel le connecteur mâle (80) comprend un connecteur électrique coaxial.

13. - Ensemble indicateur de touche selon l'une quelconque des revendications 10 à 12, dans lequel la prise (72) comprend un raccord à baïonnette.

14. - Ensemble indicateur de touche selon l'une quelconque des revendications 10 à 13, dans lequel la prise (72) est située sur la première face (14) du boîtier (12), et dans lequel la prise (72) s'étend dans une orientation inclinée avec une extrémité ouverte dirigée vers le bas à partir de la première face (14) du boîtier (12).

15. - Procédé pour fournir un ensemble indicateur de touche comprenant un indicateur de touche (10), le procédé comprenant positionner l'indicateur de touche (10), l'indicateur de touche (10) comprenant un boîtier (12), le boîtier (12) comprenant :
une première face (14) et une deuxième face (16) qui sont orientées dans des directions opposées ;
une surface (22) pour supporter une canne à pêche dans une position dans laquelle une ligne de la canne à pêche est en contact avec un dispositif de détection (18) pour amener le dispositif de détection (18) à détecter un mouvement de la ligne ;
un moyen d'indication (28) pour indiquer un mouvement de la ligne ; et
un indicateur d'emplacement (40) pour indiquer l'emplacement de l'indicateur de touche (10), **caractérisé par le fait que** :
le moyen d'indication (28) est situé sur la première face (14) du boîtier (12) et l'indicateur d'emplacement (40) est situé sur la deuxième face (16) ; et
le procédé comprend commander à distance l'indicateur d'emplacement (40) pour émettre de la lumière à l'aide d'une unité de commande à distance portable (50).
